# EUROPEAN PATENT APPLICATION

(11) **EP 1 519 070 A1**
(43) Date of publication of application: **30.03.2005**
(21) Application number: 04020098.2
(22) Date of filing: 25.08.2004
(51) Int. Cl.: F16D 65/097, F16D 55/00

(54) **Pad retainer spring**

(30) Priority: 23.09.2003 SE 0302534
(71) Applicant: Haldex Brake Products AB, 261 24 Landskrona (SE)
(72) Inventor: Larsson, Hakan, 244 93 Kävlinge (SE)
(74) Representative: Karlsson, Leif

(57) **Abstract**

The present invention concerns a pad retainer spring (5) for a disc brake. The pad retainer spring (5) is to be received on top of a back plate (1), between a pad holder (4) and the back plate (1). The pad retainer spring (5) has a middle part (6), the form of which is to be adapted to the shape of the pad holder (4) in mounted condition. The middle part (6) has a curvature, which may have the form of a circular arc having a radius (R). The parts (9) of the pad retainer spring (5) adjacent the middle part (6) are inclined and has end parts (7) having a slit (8). The slits (8) are normally placed straddling ears (3) of the back plate (1).

## Description

### Technical Field

The present invention concerns a pad retainer spring. The pad retainer spring is developed for disc brakes for heavy road vehicles, but a person skilled in the art realises that the pad retainer spring may be used for any kind of vehicle.

### Prior Art

For a disc brake the brake pads are normally positioned in the brake by means of back plates. Almost all disc brakes have two or more back plates to which the brake pads are fixed. In order to keep the back plates and thus the brake pads in place some kind of pad holder is placed on top of the back plates. The pad holder is fixed to the caliper. To guarantee proper placing of the back plates and to keep the pads in correct position relative to the disc(s) a pad retainer spring is arranged between the pad holder and each back plate.

### Summary of the Invention

In the contact between pad holder and pad retainer spring there are normally small movements, e.g. due to dirt, which movements give rise to a relatively extensive wear.

According to one aspect of the present invention the pad retainer spring is designed based on the expected force exerted on it. The spring is formed to follow, as well as possible, the outlines of the pad holder after mounting, which pad holder is placed on top of the back plate.

To give the desired feature the spring is formed with a curvature in relaxed condition in the area abutting the pad holder. In one embodiment the curvature has the form of a circular arc. By the form of the pad retainer spring the contact pressure will be relatively even over the entire contact surface between pad retainer spring and pad holder. This will reduce wear caused by small movements in the contact surface.

Furthermore, the design of the spring gives a certain force-displacement characteristic of the spring with respect to radial movements of the pad relative the pad holder. The pad retainer spring is inclined in regions on both sides of the part of the spring abutting the pad holder. For large radial movements of the pad relative to the pad holder, these inclined regions are interacting with the curvature on the top of the back plate, resulting in a progressive force-displacement characteristic of the pad retainer spring with respect to large radial movements. Thus, by the design of the pad retainer spring it is possible to control the force-displacement characteristic of the pad retainer spring. Expressed differently it is important that the force-displacement characteristic of the pad retainer spring is progressive, in order for the pad retainer spring to show the desired performance.

A progressive force-displacement characteristic of the spring is beneficial regarding restricting the dynamic forces in case of excessive vibrations.

Thus, the spring may be designed, regarding the radius of the part to abut the pad holder, the inclination of the adjacent regions and the distance between two contact points between the pad retainer spring and the back plate, to give the desired characteristics.

Further objects and advantages of the present invention will be obvious to a person skilled in the art when reading the detailed description below.

### Brief Description of the Drawings

The invention will be described further below by way of examples and with reference to the enclosed drawings. In the drawings:

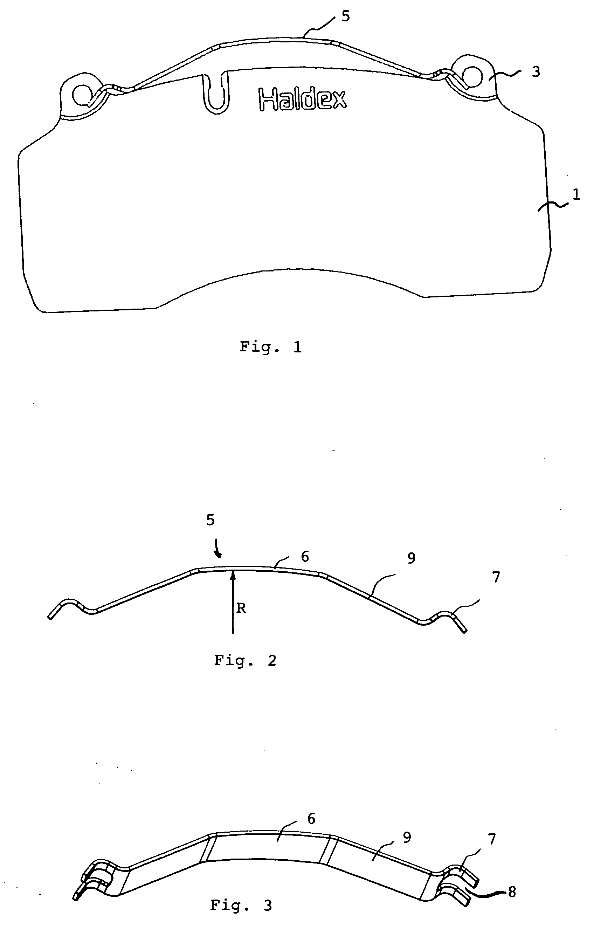

Fig. 1 shows a back plate and a pad retainer spring according to the present invention;
Fig. 2 shows an example of a pad retainer spring according to the present invention in side view;
Fig. 3 shows the pad retainer spring of Fig. 2 in perspective view;
Fig. 4 indicates the difference of the pad retainer spring of Figs. 2 and 3 in relaxed and mounted condition, respectively;
Fig. 5 shows an example of a caliper for a disc brake, enclosing back plates, pad retainer springs and pad holder; and
Fig. 6 shows one example of a characteristic of a pad retainer spring according to the present invention.

### Detailed Description of Preferred Embodiments

In a disc brake it is common to arrange brake pads on back plates 1. To simplify the description the expression "back plate" is normally used in a broad sense throughout this description. It is to be understood that the expression "back plate" includes the brake pad or pads, even if not explicitly stated. The brake pad(s) is normally fixed to the back plate 1 by means of an adhesive or the like. Depending on placement of the back plate 1 it may have brake pads on one or both sides. A person skilled in the art realises that the number of back plates 1 may vary from brake to brake.

The back plates 1 are normally received in such a way in a caliper 2, that the back plates can slide to effect the braking. The back plate 1 has ears 3 to facilitate dismounting. The back plates 1 are kept in place by means of a pad holder 4. The pad holder 4 is placed on top of the back plates 1 and fixed to the caliper 2.

A pad retainer spring 5 is placed between the pad holder 4 and each back plate 1. The function of the pad retainer spring 5 is mainly to secure the placing of the back plate 1, by exerting a downward force on the back plate 1. Furthermore, the pad retainer spring 5 counteracts any tendency for the back plates 1 to rattle.

The caliper 2 of Fig. 5 is only shown as an example for illustration purposes. A person skilled in the art realises that the exact design of the caliper 2 and, thus, the disc brake as a whole is of no importance for the present invention. Pad retainer springs 5 according to the present invention may be used with many different kinds of brakes. As the caliper 2 only is shown to illustrate the placement of the pad holder 4, the back plates 1 etc. the caliper will not be described further here.

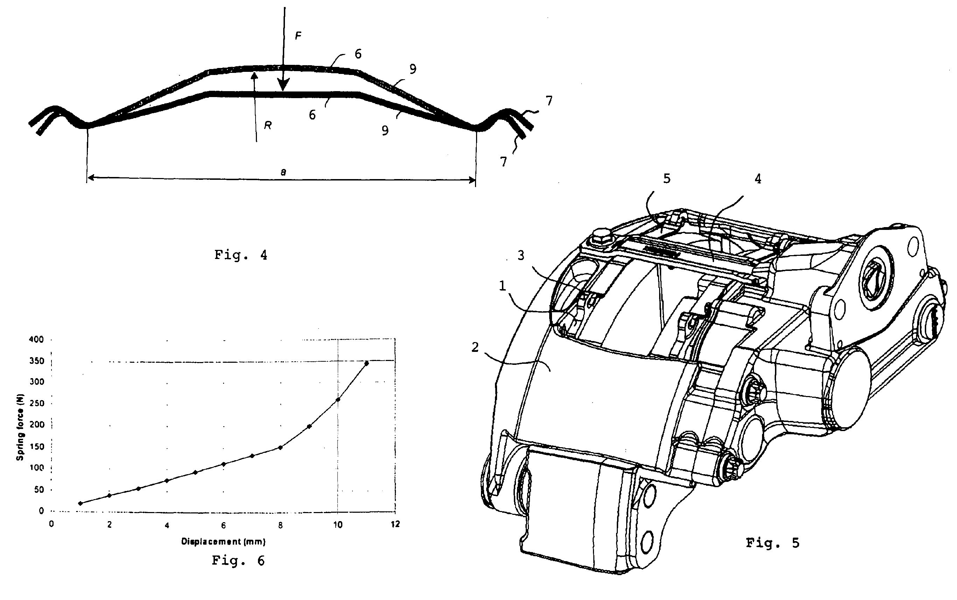

The pad retainer spring 5 has a middle part 6, which is to abut the pad holder 4 after mounting. In the relaxed condition the middle part 6 of the pad retainer spring 5 shows a small curvature. In the shown embodiment the curvature has the form of a circular arc having a radius R. The magnitude of the radius R is adapted to the expected force of the pad holder 4 on the spring 5 at mounting. The magnitude of the radius R should be such that the middle part 6 is more or less straight and conforming with the outline of the pad holder 4 in the mounted condition. Put differently the radius R is approaching infinity in the mounted condition. This is indicated in Fig. 4, where in the upper position the pad retainer spring 5 is relaxed and in the lower position it is in a mounted condition. In that the pad retainer spring 5 in mounted condition is adapted to the outline of the pad holder 4, the contact pressure will be evenly distributed over the entire contact surface.

In Fig. 4 the distance, a, defines the distance between the two contact points between the pad retainer spring 5 and the back plate 1. R is the radius of the middle part 6 of the spring in relaxed condition. F is the force exerted on the spring in mounted position. To give an example of possible dimensions of the pad retainer spring 5 it is assumed that the pad retainer spring 5 has a width of 15 mm and a thickness of 1.5 mm. Here width means the extension of the pad retainer spring 5 perpendicular to the view shown in Fig. 4. If for such a spring the following two further conditions apply: 120 mm < a < 130 mm and 110 N < F < 150 N, the radius R should be 173 mm < R < 256 mm.

A person skilled in the art realises that the middle part of the pad retainer spring can have a curvature form not being a circular arc, as long as the form of the middle part is adapted to the form of the pad holder at mounting.

The pad retainer spring 5 should further have a progressive force-displacement characteristic. One example of such a progressive characteristic is shown in Fig. 6. As can be deduced from Fig. 6 a progressive force-displacement characteristic means that the spring force increases progressively with increasing displacement of the spring.

The pad retainer spring 5 is only loosely placed on top of the back plate 1. At each end the pad retainer spring 5 has an end part 7. The parts 9 of the pad retainer spring 5 between the middle part 6 and the end parts 7 are inclined. Each end part 7 has a curvature, with the top of the curvature placed in the middle of the end part 7. In each end part 7 a slit 8 is provided. Each slit 8 is placed in the centre of the end part 7 and opens towards the free end of the pad retainer spring 5. The ears 3 of the back plate 1 are received in the slits 8. In the mounted condition the pad retainer spring 5 will normally abut the ears 3, possibly with a small play. Each ear 3 is received in the slit 8 with the end part 7 encompassing the ear 3. Thus, at mounting the pad retainer spring 5 is kept in correct tangential position by means of the ears 3 of the back plate 1. The forces of the pad retainer spring 5 will act on the back plate 1 in the areas of the spring 5 between the inclined parts 9 and the end parts 7.

The mounting of the back plates 1 will now be described. Basically the same course of events are followed both at the original assembly of the brake as when the brake pads are to be changed. When the back plates 1, including brake pads, are to be changed the pad holder 4 is first removed. At the first assembly of the brake the pad holder 4 is mounted after the back plates 1. After dismounting of the pad holder 4 the old back plates 1 are taken out of the caliper 2. Then the back plates 1, normally with the pad retainer springs 5 already in place on top of the back plates 1 are brought down into the caliper 2. The back plates 1 are placed on co-operating parts of the caliper 2, admitting sliding between the back plates 1 and the caliper 2. Finally, the pad holder 4 is fixed to the caliper 2 placed on top of the back plates 1. As described above the pad retainer spring 5 will be compressed when the pad holder 4 is fixed to the caliper 2. The pad retainer spring 5 is compressed by coaction with the pad holder and the back plate 1. By the compression of the pad retainer spring 5 it will exert downward forces on the back plate 1. At mounting the form of the middle part 6 of the pad retainer spring 5 will adapt to the form of the pad holder 4.

## Claims

1. A pad retainer spring (5) for a disc brake, which pad retainer spring (5) is to be received on top of a back plate (1), **characterized in that** the form of a middle part (6) of the pad retainer spring (5) is designed to be adapted to the shape of a pad holder (4) in mounted condition, giving an even contact pressure over the entire contact surface between pad retainer spring (5) and pad holder (4), which pad holder is placed on top of the back plate (1) at mounting.

2. The pad retainer spring (5) of claim 1, **characterized in that** the pad retainer spring (5) has a progressive force-displacement characteristic.

3. The pad retainer spring (5) of claim 1, **characterized in that** in relaxed condition the middle part (6) of the pad retainer spring (5) has a curvature.

4. The pad retainer spring (5) of claim 3, **characterized in that** the curvature of the middle part (6) has the form of a circular arc having a radius (R) and that the radius (R) approaches infinity at mounting.

5. The pad retainer spring (5) of claim 1, **characterized in that** a slit (8) is arranged in parts (7) at both ends of the pad retainer spring (5), for cooperation with ears (3) on the back plate (1).

6. The pad retainer spring (5) of claim 5, **characterized in that** each end part (7) has a curvature, that the slit (8) is placed in the centre of respective end part (7) and that the slit (8) is open towards the end of the pad retainer spring (5).

7. The pad retainer spring (5) of claim 1, **characterized in that** the pad holder (4) is fixed to a caliper (2), receiving the back plates (1).

8. The pad retainer spring (5) of any of the claims 5 to 7, **characterized in that** each part (9) of the pad retainer spring (5), placed between the middle part (6) and the end parts (7), is inclined.

9. The pad retainer spring (5) of claim 8, **characterized in that** the inclination of each part (9) of the pad retainer spring (5), placed between the middle part (6) and the end parts (7), is such that in assembled condition a progressive force-displacement characteristic of the pad retainer spring (5) is achieved with respect to radial movements of the back plate (1).

10. The pad retainer spring (5) of claim 3, **characterized in that** the radius (R) of the middle part (6) of the pad retainer spring (5) and the distance between the two contact points between the pad retainer spring (5) and the back plate (1) are adapted to the expected force exerted on the pad retainer spring (5) by the pad holder (4) at mounting.

11. The pad retainer spring (5) of claim 3, **characterized in that** the radius (R) of the middle part (6), the inclination of the adjacent parts (9) on both sides of the middle part (6) and the distance between the two contact points between the pad retainer spring (5) and the back plate (1) are designed to control the force-displacement characteristic of the pad retainer spring.

12. The pad retainer spring (5) of claim 3, **characterized in that** for a pad retainer spring (5) having a width of about 15 mm, a thickness of about 1.5 mm, a distance (a) between the two contact points between the pad retainer spring (5) and the back plate (1) in the interval of 120-130 mm, and if a force (F) in the interval of 110-150 N is exerted on the pad retainer spring (5) in mounted position, the radius (R) of the middle part (6) should be in the interval 173-256 mm.
